Europäisches Patentamt

**European Patent Office**

**Office européen des brevets**

(19)

(11) Publication number: **0 113 324**
**A2**

(12)

# EUROPEAN PATENT APPLICATION

(21) Application number: **83830253.7**

(22) Date of filing: **05.12.83**

(51) Int. Cl.³: **G 11 B 15/44**

(30) Priority: **10.12.82 IT 64582**

(43) Date of publication of application:
**11.07.84 Bulletin 84/28**

(84) Designated Contracting States:
**AT BE CH DE FR GB LI LU NL SE**

(71) Applicant: **LENCO ITALIA - S.p.A.**
**Via del Guazzatore, 207**
**I-60027 Osimo (AN)(IT)**

(72) Inventor: **Dellantonio, Ezio**
**Via Calcinaia 63**
**Roma(IT)**

(74) Representative: **Baldi, Claudio**
**Viale della Vittoria 97**
**I-60035 Jesi (Ancona)(IT)**

(54) Polyvalent mechanism for magnetic recorders and players with autoreverse.

(57) The instant invention relates to a polyvalent mechanism for magnetic recorders and players with autoreverse, i.e., apparatus in which the magnetic tape may be played by being wound in both directions without having to extract, turn over and reinsert the cassette.

Said mechanism is capable of simultaneous carrying out all the kinematic operations necessary in order to reverse the direction in which the magnetic tape is being played.

FIG 1

EP 0 113 324 A2

- 1 -

Polyvalent mechanism for magnetic recorders and players with autoreverse.

The instant Application for Industrial Patent has for its object a polyvalent mechanism for magnetic recorders and players with autoreverse, i. e., apparatus in which the magnetic tape may be played by being wound in both directions without having to extract, turn over and reinsert the cassette.

For a greater and clearer understanding of the numerous functions that the mechanism in question is capable of carrying out, it is essential to briefly describe the mechanical and kinematic conditions in which it must operate.

As already mentioned the presence of the autoreverse means that the tape must be able to be set in motion and wound in both directions without turning the cassette over, thus the apparatus must be fitted with two driving units, both unidirectional, with opposing rotational directions and obviously synchronised in such a way that the activation of one cuts out the other, and viceversa.

Each driving unit basically consists of a thin rotating pivot, usually called "capstan axis" by technicians in the field, co-ordinating with an idle tape guide roller, which, by means of constant pressure directs the tape against the aforesaid pivot.

Thus, the tape driven in this way gradually winds itself round one of the two pulleys provided inside the cassette,/the winding pulley in
setting
motion in order to accumulate the tape whilst the unwinding pulley is idle.

It should be clear that in order to obtain the reverse direction of play,

the previously idle pulley must now become the winding pulley, whilst the other, which becomes the unwinding one, remains idle.

In traditional systems based on the "capstan axis" together with the tape guide roller, the tape winding action does not depend on the accumulating drive of the tape but/two distinct flywheels, driven by either a single belt or two separate belts are used.

Without going any deeper into this kinematic decsription, it should be noted that such mechanisms are somewhat complex and articulated, and involve numerous gears, flywheels, levers etc., making costruction costs high.

The polyvalent mechanism, object of this application for patent, opera tes in a simplified driving system characterized by the fact that the accumulating drive is closely linked to the winding drive of the tape, in that the accumulating pulley is driven by a gear, an integral part of one of the aforesaid rotating pivots.

This mechanism is substantially based on a polyvalent lever which, ac cording to whether it is put into one or the other of its opposing po sitions, prepares one of the two driving units for the winding of the tape, at the same time, excluding the other.

It also simultaneously sets in motion one of the two winding pivots together with the pulley which must accumulate the tape for the selected direction of play, and renders the other pulley idle.

The aforesaid lever is, furthemore, capable of interpreting the cassette eject command in such a way that during the ejection phase the same direction of play can always be had, so that when inserting a new cas sette one is sure that the cassette starts to play on the same side, even if the previous cassette was being played on the opposite side.

Moreover, the aforesaid lever, also acts on the multiple slide switch for the change over of the playing heads in either direction of play.

Further features of said invention and other advantages will become apparent as this specification proceeds, with reference to the accompa

nving drawings which are for a clearer illustration and exemplify only one preferred embodiment of the polyvalent mechanism according to the instant invention.

Fig. 1 illustrates the aforesaid lever in one of its two end-of-play positions.

Fig. 2 illustrates the aforesaid lever in its other end-of-play position.

Fig. 3 illustrates the aforesaid arm in its two aforementioned end-of--play positions but with the omission of the structural details in order to emphasize the very particular and specific function of this lever.

With reference to the aforesaid figures the lever (1) cut from a sheet of plate, is pivoted along its central line on the hole (2).

It is of a rather irregular and articulated shape and characterized by three appropriately shaped projections, (1a), (1b) and (1c), the action or non-action of which upon matching elements, belonging to other kinematic processes, prepares for one rather than the other direction of play.

On the under surface of the lever (1) are pivoted two idle gear wheels (3) and (4) which remain in mesh as the wheel (3) is constantly engaged with the gear wheel (5a) fitted to the base of the tape winding pivot (5).

The other pivot ("capstan" axis) for winding the tape in the opposite direction has been indicated with the number (6), whilst number (7) and (8) refer to the tape guide rollers which co-ordinate, respectively, with the driving axis (5) and driving axis (6).

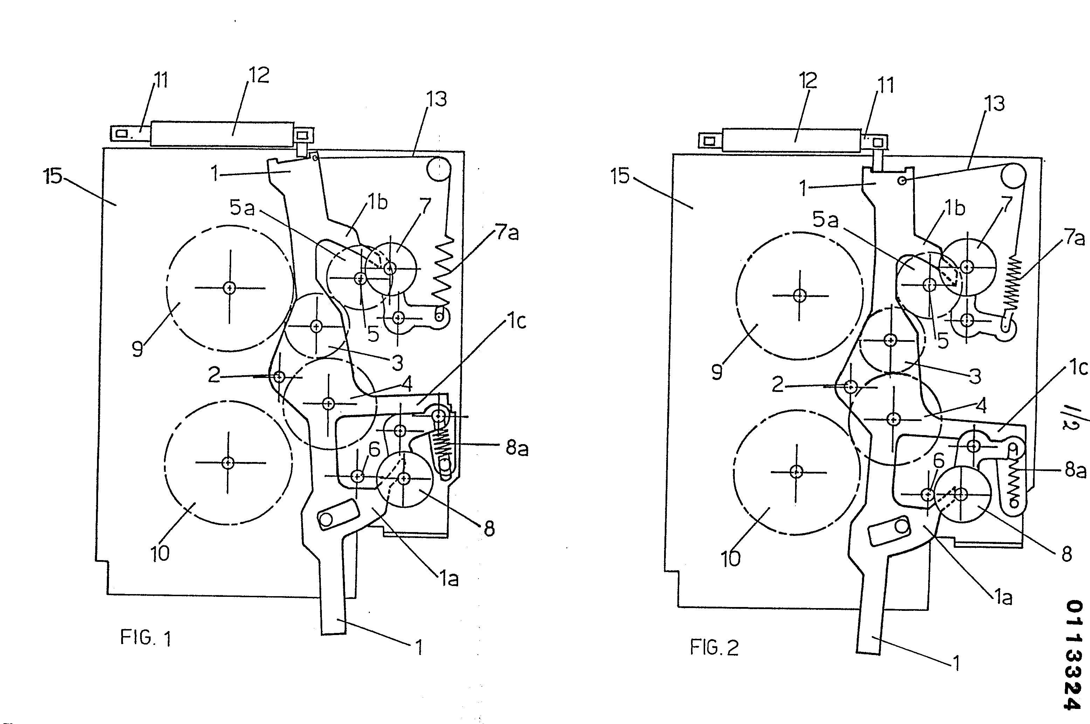

The position of the lever in fig. 1 corresponds to a direction of play where the magnetic tape is set in motion by the axis (5) which is, in fact, in tight contact with the respective tape guide roller (7).

The other pivot (6), although revolving simultaneously and in the opposite direction to the axis (5), cannot have any effect on the tape in that it is not in mesh with its own tape roller guide (8) which is

- 4 -                                    0113324

held back by the aforesaid projection (1a) of the lever (1).

Still referring to fig. 1, it should be noted that the idle wheel (3) is engaged with the driving gear (5a) and the driven gear (9) which rotates the pulley onto which the tape has to accumulate for the dire ction of play in progress.

The gear wheel (10) paired with the other pulley, the unwinding one for the direction of play in progress, is idle as it is not coupled with the idle gear wheel (4).

By moving the lever (1) into its opposite end-of-play position the confi guration illustrated in fig. 2 is had, where the direction of play is now switched over.

With reference to fig. 2, it should be noted that the rotation of the lever (1) around its own fulcrum (2) causes the idle wheel (3), while still being in mesh with the gear (5a), to move away and disengage from the gear (9) thus rendering the pulley attached to it idle.

Simultaneously, the idle wheel (4) has coupled with the gear (10) thus making the pulley attached to it the accumulating one.

This rotation of the lever (1), furthemore, prepares the driving pivot (6), in that the retraction of the projection (1a) allows for the forward movement of the tape guide roller against the driving axis (6).

As the projection (1a) moves backwards the projection (1b) provided at the opposite end of the lever (1), simultaneously moves forward.

Said projection intercepts and gradually moves the tape guide roller (7) away from the respective driving axis (5), thus rendering it inactive.

With reference to both figures 1 and 2, it should now be noted that the moving of the lever (1) also involves, due to the action of corres ponding teeth, the translation of a slide (11) which is an integral part of the multiple switch for the change over of the playing heads in either direction of play.

0113324

Still referring to figures 1 and 2, it should be noted that the projection (1c) of the lever (1) with an intervening action, releases the spring (8a) connected to the tape guide roller (8), whenever this roller is inactive and that is, when the selected direction of play comes into operation with the tape being set in motion by the other guide roller (7) in conjunction with its respective pivot (5).

By reversing the direction of play, the projection (1c) compresses the spring (8a) whilst, at the same time, the spring (7a) of the roller (7) is released; the former spring being compressed by the same lever (1) by means of a connecting rubber-coated cable (13).

A spring (14) anchored to the casing (15) ensures that the lever (1) once it has passed a neutral central point, securely reaches one of its two opposing end-of-play positions.

In the light of what has been herein described with reference to, and as indicated by the accompanying drawings, it should be clear as to how the lever (2), according to the position assumed, is able to simul taneously bring about all/the necessary kinematic processes required to reverse the tape direction of play.

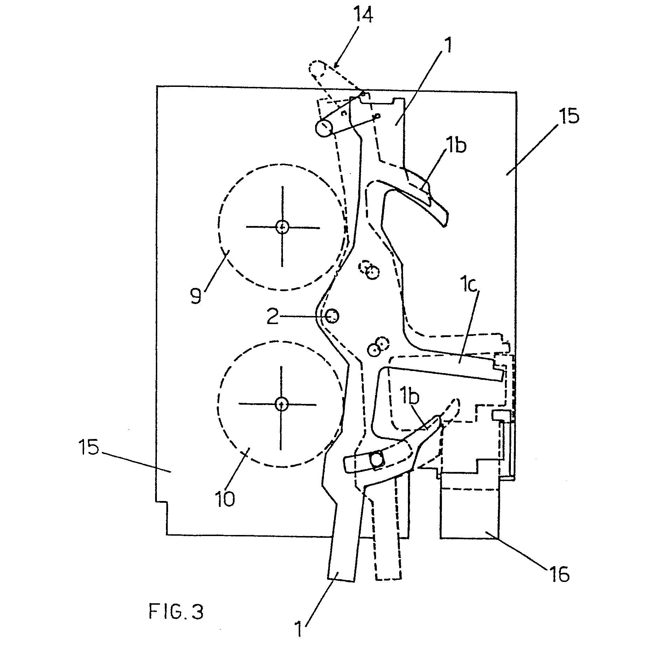

With reference to figure 3, we shall examine how the lever (1) is able to anticipate the ejection of the cassette and to intervene with such synchrony that after the ejection of the cassette the direction of play that comes into effect is always the same even if contrary to that of the last played and ejected cassette.

Immediately below the control button for the cassette ejection a sliding block (16) is provided.

Said block (16) is unintentionally pushed inwards by the user together with the aforementioned control button.

Should the block (16) meet the projection (1c) before the end of its run, a contact that will only take place if the last direction of play was contrary to the one desired once the cassette has been inserted, it rotates the lever (1) to the position corresponding to direction of play preselected when the apparatus was empty.

It will be understood that this specification has been made with refe rence to only one preferred embodiment of the instant invention, therefore, various modification and alternatives, above all concerning the construction may be made by technicians in the field and still come within the scope of this invention with reference to and as indi cated by the accompanying drawings.

For example, with an appropriate articulation of the lever (1), easily carried out by experts in this field, the idle wheels (3) and (4) may alternatively be engaged for opposite directions of play, the former with a gear fitted on its driving pivot (5) and with driven gear (9), the latter with a gear wheel on its driving pivot (6) and with the gear (10).

Finally, according to another preferred embodiment, which still comes within the scope of this invention, instead of using two idle wheels a single one could be used, which, following the opportune shifting of the lever (1) alternatively rotates the driven gear wheels (9) and (10) getting motion respectively from the gears on the driving pivot (5) and on the pivot (6).

- 1 -

Claims

1) Polyvalent mechanism for magnetic recorders and players with auto reverse characterized by said mechanism which is capable of simultaneously carrying out all the kinematic operations necessary in order to reverse the direction of play of the magnetic tape, comprising a flat and elongated articulated lever (1), which is pivoted and of a rather irregular shape, with three suitably shaped side projections. On the under surface of said lever (1) are provided two idle wheels (3) and (4), constantly engaged, and located in an area between the two gears (9) and (10) provided to set in motion the tape winding pulley, on one side, and between the two pivots or driving axes (5) and (6), on the other side.

2) Polyvalent mechanism for magnetic recorders and players with auto-reverse as claimed in/the preceding claim, characterized by an idle wheel (3) which is always in mesh with the gear (5a) at the base of the aforesaid driving pivot.

3) Polyvalent mechanism for magnetic recorders and players with auto reverse as claimed in claim 1), characterized by the aforesaid projections (1a) and (1b) which act alternatively and respectively on the tape guide roller (8) together with the aforesaid driving axis (6), and the tape guide roller (7) together with the driving axis (5), since the roller (8) is held back by the projection (1a), the roller (7), on the other hand, is free to advance and press against the respective driving axis (5), and viceversa.

4) Polyvalent mechanism for magnetic recorders and players with autoreverse as claimed in claim 1), characterized by the fact that whenever the idle wheel (3) is engaged with ~~the of tape that or be never the idle~~ ~~wheel (3) is engaged with~~ the gear (9) paired with the accumulating pulley when the driving action is carried out by the pivot (5) in conjunction with the tape guide roller (7), the idle wheel (4) is disengaged from the gear (10) paired with the accumulating pulley when the driving action is carried out by the axis (6) in conjunction with the tape guide roller (8), and viceversa.

5) Polyvalent mechanism for magnetic recorders and players with autore verse as claimed in claim 1), characterized by a lever (1) with a forked tip, the teeth of which, following the shifting of the lever, intervene and alternatively move in the opposite direction, a slide which is a part of the multiple switch for the change over of the playing heads in either directions of play.

6) Polyvalent mechanism for magnetic recorders and players with autore verse as claimed in claim 1), characterized by the fact that whenever a new cassette is inserted, the lever (1) is prepared for a direction of play different to the preselected one when the apparatus was empty, the projection is hit and pushed, and consequently the lever (1) is mo ved, by a sliding block (16) which is an integral part of the control panel for the ejection of the cassette.

7) Polyvalent mechanism for magnetic recorders and players with autore verse, as claimed in claim 1), characterized by the fact that movement of the lever (1) brings about the compression of the spring (8a) of the tape guide roller (8) paired with the driving axis (6) and, at the same time, allows for the release of the spring (7a) of the tape guide roller (7) paired with the driving axis (5), inactive due to the direc tion of play in progress.

8) Polyvalent mechanism for magnetic recorders and players with autore verse, as claimed in claim 1) and according to another preferred form of articulation of the same lever, characterized by the idle wheels (3) and (4), constantly engaged, which are alternatively meshed for opposi te directions of plays, the former with a gear on its driving pivot (6) .

and with the gear (10).

9) Polyvalent mechanism for magnetic recorders and players with autoreverse, as claimed in claim 1) and according to a third preferred form of articulation of the same lever, characterized by the fact that instead of having two distinct idle wheels, only a single wheel is had, pivoted on the lever (1), which, following a shifting of the lever, rotates the driven gears (9) and (10), getting respectively motion from the gears on the driving pivot (5) and on the driving pivot (6).

FIG. 1

FIG. 2

TAV. I-2

1/2

0113324

FIG.3

STUDIO DI CONSULENZA
BREVETTI - MARCHI
Dott. Ing. CLAUDIO BALDI
V.le della Vittoria 97 - JESI - Tel. 59 595